Europäisches Patentamt

European Patent Office

Office européen des brevets

(19)

(11) Veröffentlichungsnummer : **0 135 893**
**B1**

(12) **EUROPÄISCHE PATENTSCHRIFT**

(45) Veröffentlichungstag der Patentschrift :
15.06.88

(51) Int. Cl.⁴ : **G 05 B   9/02**

(21) Anmeldenummer : 84110965.5

(22) Anmeldetag : 13.09.84

(54) Prozesssignalumsetzer für Werkzeugmaschinensteuerungen.

(30) Priorität : 26.09.83 DE 3334736

(43) Veröffentlichungstag der Anmeldung :
03.04.85 Patentblatt 85/14

(45) Bekanntmachung des Hinweises auf die Patenterteilung : 15.06.88 Patentblatt 88/24

(84) Benannte Vertragsstaaten :
DE FR IT NL

(56) Entgegenhaltungen :
PATENTS ABSTRACTS OF JAPAN, Band 7, Nr. 172,
29. Juli 1983, Seite 133P213; & JP - A - 58 78202
IBM TECHNICAL DISCLOSURE BULLETIN, Band 25,
Nr. 7A, Dezember 1982, New York, USA; E.H. MIL-
LHAM: "Tri-state driver protection"

(73) Patentinhaber : Siemens Aktiengesellschaft Berlin
und München
Wittelsbacherplatz 2
D-8000 München 2 (DE)

(72) Erfinder : Röhrle, Josef, Dipl.-Ing.
Am Kahlberg 12
D-8521 Hessdorf (DE)
Erfinder : Seidner, Johann, Dipl.-Ing.
Eskilstunastrasse 15
D-8520 Erlangen (DE)

EP 0 135 893 B1

**Beschreibung**

Die Erfindung bezieht sich auf einen Prozeßsignalumsetzer, insbesondere für Werkzeugmaschinensteuerungen, wobei Meldungen beinhaltende Prozeßsignale mit zwei unterschiedlichen Pegelbereichen über ein Dämpfungsglied und ein nachgeschaltetes Zeitglied nach Art eines Tiefpasses einer ersten Schwellwertstufe zuführbar sind, die entsprechend den detektierten Pegelbereichen Steuersignale logisch « 0 » und logisch « 1 » ausgibt, wobei der Ausgang der ersten Schwellwertstufe beim Nichtvorliegen eines Prozeßsignals in hochohmigen Zustand schaltbar ist, wobei Steuersignale logisch « 0 » dem inaktiven und logisch « 1 » dem aktiven Zustand für nachgeschaltete Prozeßelemente entsprechen und wobei die erste Schwellwertstufe in ihrer Eingangsbeschaltung eine Diode aufweist, die im Falle eines Durchlegierens aufgrund einer eingangsseitigen Störspannung das Auslösen des Steuersignals logisch « 1 » bewirkt.

Umsetzer dieser Art werden in handelsüblichen Werkzeugmaschinensteuerungen zur Anpassung der Prozeßsignale an für die Signalverarbeitung vorgesehene Bussysteme verwendet. Die Eingangsbeschaltung der Schwellwertstufe ist zum Schutz der verwendeten Bauelemente im allgemeinen als mit der Versorgungsspannung für die Schwellwertstufe verbundene Diode ausgebildet, z. B. integrierte Schaltung MM 54 HC/MM 74 HC. Sofern diese Diode durchlegiert, gelangt jedoch die Versorgungsspannung an den Eingang der Schwellwertstufe und löst für diese ein Ausgangssignal logisch « 1 » aus. Dadurch können unerwünschte Betriebszustände der nachgeschalteten Prozeßelemente bewirkt werden.

Aufgabe der Erfindung ist es, einen Prozeßsignalumsetzer der eingangs genannten Art so auszubilden, daß Störungen der Eingangsbeschaltung dazu führen, daß durch die Schwellwertstufe ein Steuersignal logisch « 0 » ausgelöst wird.

Gemäß der Erfindung wird diese Aufgabe dadurch gelöst, daß die erste Schwellwertstufe einen invertierenden Ausgang aufweist, daß dem Zeitglied eine zweite Schwellwertstufe mit invertierendem Ausgang vorgeschaltet ist, der eingangsseitig über das Dämpfungsglied die Prozeßsignale zugeführt werden, und daß die zweite Schwellwertstufe als eine für einen relativ großen Eingangsspannungsbereich geeignete Schwellwertstufe ausgebildet ist, deren Ausgang nicht in einen hochohmigen Zustand schaltbar ist, sondern die den zwei Pegelbereichen der eingangsseitigen Prozeßsignale ausgangsseitig zwei normierte Spannungen zuordnet, die dem Eingang des Zeitgliedes zugeführt werden.

Damit wird nicht nur durch zweimalige Inversion eine nichtinvertierende Prozeßsignalumsetzung erreicht, bei der die oben gestellte Aufgabe erfüllt wird, sondern dadurch, daß die zweite Schwellwertstufe normierte Spannungen ausgibt, wird das Zeitverhalten des Zeitgliedes stabilisiert.

Da die zweite Schwellwertstufe auch nicht das Erfordernis eines hochohmigen Ausgangs bedingt, kann bei dieser Schwellwertstufe auf einen Typ zurückgegriffen werden, bei dem die erwähnte Eingangsbeschaltung entfällt, z. B. CD 4049 M/CD 4049 C bzw. CD 4050 BM/CD 4050 BC.

Ein Ausführungsbeispiel der Erfindung ist in der Zeichnung dargestellt und wird im folgenden näher erläutert.

Dabei zeigen :

Fig. 1 einen üblichen Prozeßsignalumsetzer und

Fig. 2 einen erfindungsgemäßen Prozeßsignalumsetzer.

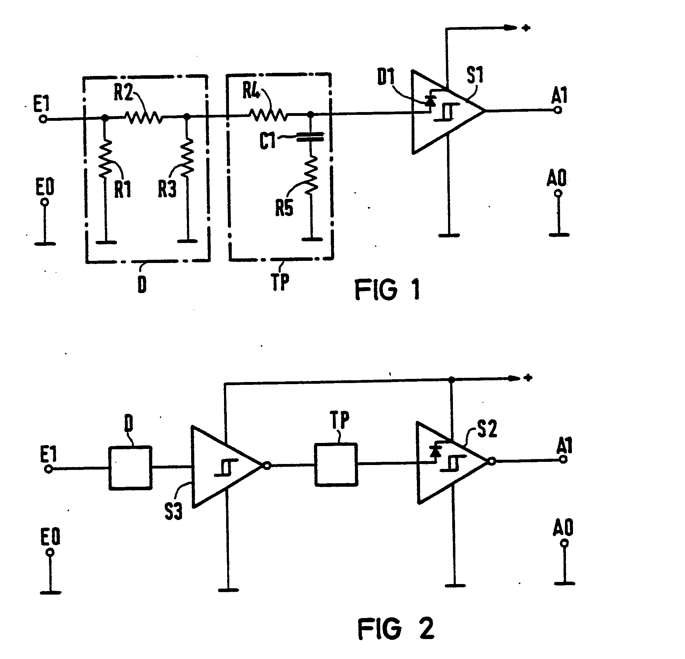

In der Darstellung gemäß Fig.1 ist ein Prozeßsignalumsetzer gezeigt, dem über Eingangsklemmen E0 und E1 (jeweils durch offene Kreise symbolisiert) Prozeßsignale als Meldungen einer der Übersichtlichkeit halber nicht dargestellten Werkzeugmaschine zugeführt werden. Die Prozeßsignale genügen dabei folgenden Bedingungen : Logisch « 0 » entspricht -3V bis 5V, logisch « 1 » entspricht 13V bis 30V. Zur Verarbeitung in logischen Schaltkreisen einer numerischen Steuerung für die Werkzeugmaschine werden für die Zustände logisch « 0 » und logisch « 1 » jedoch wesentlich niedrigere Werte gefordert. Daher werden die Prozeßsignale zunächst einem Dämpfungsglied D (gestrichelt dargestellt) zugeführt, das aus drei Widerständen R1, R2 und R3 gebildet wird. Der Widerstand R1 dient dabei dazu, den relativ hochohmigen Eingangswiderstand des Prozeßsignalumsetzers entsprechend den Erfordernissen der Prozeßsignalgeber, welche der Übersichtlichkeit halber nicht dargestellt sind, zu senken. Die Widerstände R2 und R3 bilden einen Spannungsteiler, durch den eine Pegelabsenkung der Prozeßsignale vorgenommen werden kann, bevor diese über einen Tiefpaß TP (gestrichelt dargestellt) einer Schwellwertstufe S1 zugeführt werden. Diese detektiert die zwei möglichen unterschiedlichen Pegelbereiche des Prozeßsignals und gibt dementsprechend Steuersignale logisch « 0 » und logisch « 1 » aus, die von der der Übersichtlichkeit halber nicht dargestellten logischen Steuerung mit Busstruktur weiterverarbeitet werden, die Prozeßsignale erzeugt, die als Befehle für die Werkzeugmaschine dienen. Ferner kann der Ausgang der Schwellwertstufe S1 für den Fall, daß keine Prozeßsignale zu detektieren sind, hochohmig geschaltet werden.

Der Tiefpaß TP dient dazu, hochfrequente Störungen der Prozeßsignale auszublenden. Dabei bestimmt die Reihenschaltung der Widerstände R4 und R5 zusammen mit der Kapazität des Kondensators C1 dessen Ladezeitkonstante und der Widerstand R5 bestimmt zusammen mit der Kapazität des Kondensators C1 dessen Entladezeitkonstante. Sowohl die Konfiguration des Dämpfungsgliedes D als auch diejenige des Tiefpasses TP kann beliebig entsprechend den Dämpfungserfordernissen bzw. den erwünschten Zeitkonstanten variiert werden. Schwankungen der Prozeßsignalamplituden führen allerdings zu Schwankungen der durch den Tiefpaß TP bedingten Verzögerungszeit.

Wenn für die als Bustreiber dienende Schwellwertstufe S1 ein üblicher Baustein in C-MOS-Technik eingesetzt wird, weist dieser als Eingangsschutzbeschaltung eine Diode D1 auf, die zwischen den Eingang der Schwellwertstufe S1 und die durch ein Plus-zeichen symbolisierte positive Versorgungsspannung für die Schwellwertstufe S1 geschaltet ist. Sofern beispielsweise durch unbeabsichtigte Spannungsspitzen aufgrund von statischen Entladungen ein Durchlegieren dieser Diode D1 erfolgt, gelangt die positive Versorgungsspannung an den Eingang der Schwellwertstufe S1 und führt dazu, daß an deren Ausgang ein Signal logisch « 1 » ansteht. Ein derartiges Signal logisch « 1 », das den jeweils durch offene Kreise angedeuteten Ausgangsklemmen A0 und A1 des Prozeßsignalumsetzers zugeführt wird, veranlaßt jedoch die weiteren Verarbeitungseinrichtungen, in ihren aktiven Zustand überzugehen, was im Sinne der Betriebssicherheit als ungünstig sich erweist.

Bei der Einrichtung gemäß Fig. 2 ist die Schwellwertstufe S1 gemäß Fig. 1 durch eine Schwellwertstufe S2 mit invertierendem Ausgang, aber am übrigen gleichen Eigenschaften wie die Schwellwertstufe S1 ersetzt worden. Ferner ist zwischen das Dämpfungsglied D und den Tiefpaß TP, die ebenfalls denjenigen gemäß Fig. 1 entsprechen, eine weitere Schwellwertstufe S3 mit invertierendem Ausgang geschaltet. Die Schwellwertstufe S3 ist für einen relativ großen Eingangsspannungsbereich ausgelegt. Eine Diode als Eingangsschutzbeschaltung ist nicht vorgesehen. Ein Zustand « Ausgang hochohmig » ist nicht erforderlich.

Wenn bei einer Anordnung gemäß Fig. 2 ein Durchlegieren der Diode D2 der Schwellwertstufe S2 mit invertierendem Ausgang erfolgt, führt dies dazu, daß an der Ausgangsklemme A1 ein Signal logisch « 0 » ansteht, das für weitere nachgeschaltete Verarbeitungseinrichtungen deren inaktiven Zustand bewirkt. Um jedoch die Entsprechung der Prozeßsignale zu den Ausgangssignalen der Schwellwertstufe S2 mit invertierendem Ausgang zu gewährleisten, ist eine weitere Inversion zwischen Eingang E1 und Ausgang A1 erforderlich. Diese erfolgt über die Schwellwertstufe S3 mit invertierendem Ausgang. Das Dämpfungsglied D stellt sicher, daß der Eingangsstrom für die Schwellwertstufe S3 mit invertierendem Ausgang so begrenzt ist, daß diese gegen Überspannungen geschützt ist.

Durch die Schwellwertstufe S3 erfolgt bereits vor dem Tiefpaß TP ein Umsetzen der Prozeßsignale in normierte Spannungen, wodurch auch die Verzögerungszeit durch den als Zeitglied vorgesehenen Tiefpaß TP normiert ist.

**Patentanspruch**

Prozeßsignalumsetzer, insbesondere für Werkzeugmaschinensteuerungen, wobei Meldungen beinhaltende Prozeßsignale mit zwei unterschiedlichen Pegelbereichen über ein Dämpfungsglied (D) und ein nachgeschaltetes Zeitglied (TP, Fig. 2) nach Art eines Tiefpasses einer ersten Schwellwertstufe (S2) zuführbar sind, die entsprechend den detektierten Pegelbereichen Steuersignale logisch « 0 » und logisch « 1 » ausgibt, wobei der Ausgang der ersten Schwellwertstufe (S2) beim Nichtvorliegen eines Prozeßsignals in hochohmigen Zustand schaltbar ist, wobei Steuersignale logisch « 0 » dem inaktiven und logisch « 1 » dem aktiven Zustand für nachgeschaltete Prozeßelemente entsprechen und wobei die erste Schwellwertstufe (S2) in ihrer Eingangsbeschaltung eine Diode aufweist, die im Falle eines Durchlegierens aufgrund einer eingangsseitigen Störspannung das Auslösen des Steuersignals logisch « 1 » bewirkt, dadurch gekennzeichnet, daß die erste Schwellwertstufe (S2) einen invertierenden Ausgang aufweist, daß dem Zeitglied (TP) eine zweite Schwellwertstufe (S3) mit invertierendem Ausgang vorgeschaltet ist, der eingangsseitig über das Dämpfungsglied (D) die Prozeßsignale zugeführt werden, und daß die zweite Schwellwertstufe (S3) als eine für einen relativ großen Eingangsspannungsbereich geeignete Schwellwertstufe ausgebildet ist, deren Ausgang nicht in einen hochohmigen Zustand schaltbar ist, sondern die den zwei Pegelbereichen der eingangsseitigen Prozeßsignale ausgangsseitig zwei normierte Spannungen zuordnet, die dem Eingang des Zeitgliedes (TP) zugeführt werden.

**Claim**

Process signal converter, in particular for machine tool controls, whereby process signals, containing messages, with two different marker regions, can be fed to a first threshold value stage (S2) via an absorptive attenuator (D) and a downstream-connected time component (TP, Fig. 2) in the fashion of a low pass filter, which threshold value stage (S2), corresponding to the detected marker regions, emits control signals logical « 0 » and logical « 1 », whereby the output of the first threshold value stage (S2) can be switched to a highly resistive state when there is no process signal, whereby control signals logical « 0 » correspond to the inactive and logical « 1 » to the active state for downstream-connected process elements, and whereby the first threshold value stage (S2) has a diode in its input wiring, which, in the case of alloying throughout due to an input interference voltage, effects the release of the control signal logical « 1 », characterised in that the first threshold value stage (S2) has an inverting output, in that a second threshold value stage (S3) with inverting output is connected upstream of the time component (TP), to which threshold value stage (S3) the process signals are fed on the input side via the absorptive attenuator (D), and in that the second threshold value stage (S3) is constructed as a threshold value stage which is suitable for a relatively large setting region, the output of which cannot be switched into a highly resistive state, but which allocates the two standardised voltages on the output side to the two marker regions of the input side process signals, which voltages are fed to the input of the time component (TP).

### Revendication

Convertisseur de signaux de processus, en particulier pour commandes de machines-outils, dans lequel des signaux de processus contenant des messages sont applicables avec deux plages de niveau différentes, à travers un atténuateur (D) et un élément de retard (TP, Fig. 2) prévu à sa suite et agissant à la façon d'un passe-bas, à un premier étage à seuil (S2) qui délivre des signaux de commande « 0 » logique et « 1 » logique suivant les plages de niveau détectées, la sortie du premier étage à seuil (S2) étant commutable à un état de forte résistance ohmique en cas d'absence d'un signal de processus, le signal de commande « 0 » logique correspondant à l'état inactif et le signal de commande « 1 » logique correspondant à l'état actif d'éléments de processus montés à la suite et le premier étage à seuil (S2) présentant, dans son câblage d'entrée, une diode déclenchant le signal de commande « 1 » logique en cas de claquage par suite de l'application d'une tension parasite à l'entrée, caractérisé en ce que le premier étage à seuil (S2) comporte une sortie inverseuse, que l'élément de retard (TP) est précédé par un second étage à seuil (S3) avec une sortie inverseuse, à l'entrée duquel les signaux du processus sont appliqués, à travers l'atténuateur (D), et que le second étage à seuil (S3) est réalisé comme un étage convenant pour une plage de tension d'entrée relativement grande, dont la sortie n'est pas commutable à un état à forte résistance ohmique, mais qui coordonne aux deux plages de niveau des signaux de processus appliqués à l'entrée, deux tensions normalisées qui apparaissent à sa sortie et sont amenées à l'entrée de l'élément de retard (TP).

FIG 1

FIG 2